# EUROPÄISCHE PATENTSCHRIFT

(11) **EP 2 123 485 B1**
(45) Veröffentlichungstag und Bekanntmachung des Hinweises auf die Patenterteilung: **24.10.2012**
(21) Anmeldenummer: 09155451.9
(22) Anmeldetag: 18.03.2009
(51) Int. Cl.: B60C 11/03, B60C 11/12

(54) **Fahrzeugluftreifen**
Pneumatic tyres for a vehicle
Pneus de véhicule

(30) Priorität: 17.05.2008 DE 102008024072
(43) Veröffentlichungstag der Anmeldung: 25.11.2009
(73) Patentinhaber: Continental Reifen Deutschland GmbH, 30165 Hannover (DE)
(72) Erfinder: Vennebörger, Martin, 30625, Hannover (DE); Wiese, Klaus, 30559, Hannover (DE)
(74) Vertreter: Finger, Karsten

(56) Entgegenhaltungen:
- EP-A- 0 722 851
- DE-A1- 3 726 593
- JP-A- 1 136 801
- JP-A- 2000 016 031

## Beschreibung

Die Erfindung betrifft einen Fahrzeugluftreifen mit einem Laufstreifen, welcher laufrichtungsgebunden ausgeführt ist und eine Vielzahl von V-förmig verlaufenden Hauptrillen aufweist, die zumindest abschnittsweise unter einem Winkel zwischen 5° und 25° zur Umfangsrichtung verlaufen, wobei die Hauptrillen über ihre gesamte Erstreckung im bodenberührenden Teil des Laufstreifens einen geraden oder nahezu geraden Verlauf aufweisen und sich unter Beibehaltung ihres Verlaufes über die Bodenaufstandsfläche des Reifens hinaus erstrecken, wobei die Hauptrillen aus den beiden Laufstreifenhälften in der Laufstreifenmitte jeweils paarweise zusammentreffen und in eine in Umfangsrichtung, in ihrer Verlängerung verlaufende Kurznut übergehen, und wobei die Profilpositive zwischen den in einer Laufstreifenhälfte verlaufenden Hauptrillen durch Quernuten, die vorzugsweise gerade verlaufen, in Blöcke gegliedert sind.

Ein Fahrzeugluftreifen der eingangs genannten Art ist beispielsweise aus der EP-A-0 722 851 bekannt. Der Laufstreifen weist eine Vielzahl von V-förmig verlaufenden Hauptrillen auf, welche durch Quernuten, die mit der Umfangsrichtung einen Winkel zwischen 25° und 80° einschließen und gleichsinnig zur Neigung der Hauptrillen verlaufen, in eine Vielzahl von parallelogrammförmige Profilblöcke gegliedert ist. Die JP 01 136801 A offenbart ebenfalls einen Fahrzeugluftreifen mit einem Laufstreifen mit V-förmig verlaufenden Hauptrillen und zu diesen gleichsinnig geneigten Quernuten, welche eine Gliederung in Profilblöcke bewirken. Bei dem aus der JP 2000 0116031 A bekannten Reifen sind im Laufstreifen nur V-förmig verlaufende Hauptrillen vorgesehen. Der aus der DE 37 26 593 A1 bekannte Luftreifen weist neben V-fömig verlaufenden Hauptrillen gegensinnig zu diesen verlaufende Einschnitte auf.

Weitere Fahrzeugluftreifen mit ähnlich ausgeführten Laufstreifen sind in unterschiedlichen Ausführungsvarianten bekannt. In der EP-A-0 739 758 ist beispielsweise ein Laufstreifen mit zwei Arten von V-förmig verlaufenden Nuten vorgeschlagen. Der eine Typ V-förmiger Nuten schließt einen Winkel zwischen 5° und 30° mit der Umfangsrichtung ein, der zweite Typ von V-förmigen Nuten einen Winkel größer 45°. Der gegenseitige Abstand zwischen den unter dem kleineren Winkel zur Umfangsrichtung verlaufenden Hauptrillen ist wesentlich größer als der gegenseitige Abstand der unter dem relativ großen Winkel zur Umfangsrichtung verlaufenden Nuten. Die unter dem kleineren Winkel zur Umfangsrichtung verlaufenden Nuten enden innerhalb des bodenberührenden Bereichs des Laufstreifens in Schulterblöcken, was für das Wasserableitvermögen dieser Nuten nachteilig ist. Besondere Verhältnisse der Pitchanzahlen und der Pitchlängen dieser Nuten sollen dazu beitragen, das Reifen/Fahrbahngeräusch zu reduzieren.

Aus der GB-A-2 240 522 ist ein Fahrzeugluftreifen bekannt, dessen Laufstreifen ausschließlich Hauptrillen aufweist, die in V-Form verlaufen und zwischen sich sehr schmale Rippen einschließen, wobei die Hauptrillen nahe den Schultern des Reifens über gerundete Knickstellen in Abschnitte übergehen, welche einen wesentlich größeren Winkel mit der Umfangsrichtung, insbesondere in der Größenordnung von 70°, einschließen. Die Profilpositive zwischen diesen schulterseitigen Rillenabschnitten sind durch parallel zu den Rillenabschnitten verlaufende Sacknuten zweigeteilt. Auf diese Weise sollen schulterseitig Profilpositive entstehen, die die Trocken-Handlingeigenschaften des Reifens unterstützen. Ungünstigerweise wird dadurch eine gute Entwässerung verhindert.

Der Erfindung liegt die Aufgabe zugrunde, bei einem Reifen der eingangs genannten Art das Wasserdränagevermögen und damit die Aquaplaningperformance deutlich zu verbessern ohne Einbußen im Trockenhandling in Kauf nehmen zu müssen.

Gelöst wird die gestellte Aufgabe erfindungsgemäß dadurch, dass zwischen den Endabschnitten der paarweise zusammentreffenden Hauptrillen, dort, wo keine Kurznuten verlaufen, sowie zwischen den Kurznuten und den Hauptrillen durch Quernuten weitere Blöcke gebildet sind.

Die Hauptrillen in erfindungsgemäß ausgeführten Laufstreifen verlaufen von der Laufstreifenmitte bis über die Ränder des bodenberührenden Teils gerade oder nahezu gerade. Es hat sich herausgestellt, dass solche Hauptrillen ein sehr gutes Wasserdränagevermögen aufweisen und auch bei höherer Geschwindigkeit Wasser mit sehr geringem Widerstand aus der Bodenaufstandsfläche ableiten. Durch die Kurznuten wird die Quer- und Umfangssteifigkeit des Laufstreifens, insbesondere in der Laufstreifenmitte, günstig beeinflusst.

Es wird darauf hingewiesen, dass der gerade oder nahezu gerade Verlauf - die Torusform des Reifens lässt dies nicht erkennen - in einer Abwicklung des Laufstreifens in die Ebene gegeben ist.

Für die Wasserableitung bei höheren Geschwindigkeiten ist es vorteilhaft, wenn die Hauptrillen derart verlaufen, dass der Winkel, den sie mit der Umfangsrichtung einschließen, zwischen ihren Enden in der Laufstreifenmitte und ihren Enden außerhalb der des bodenberührenden Teils des Laufstreifens um maximal 10° und kontinuierlich größer wird.

Gemäß einer bevorzugten Ausführungsform der Erfindung weisen die Hauptrillen, gegebenenfalls bis auf ihre Endabschnitte in der Laufstreifenmitte, über ihre Erstreckung eine zumindest im Wesentlichen konstante Breite auf. Diese Maßnahme unterstützt eine ausgewogene Profilsteifigkeit bei gutem Wasserableitvermögen. Eine besonders gute Wasserableitung gewährleisten Hauptrillen, welche eine Breite aufweisen, die sich von der Laufstreifenmitte bis zu den Enden der Hauptrillen außerhalb des bodenberührenden Teils kontinuierlich vergrößert Hauptrillen sowie zwischen den Kurznuten und den Hauptrillen durch weitere Quernuten zusätzliche Blöcke gebildet sein.

Je nach der Größe des Neigungswinkels der Hauptrillen relativ zur Umfangsrichtung wird der gegenseitige Abstand der Hauptrillen gewählt, wobei dieser Abstand derart bemessen wird, dass eine in Laufstreifenquerrichtung zwischen dem axial inneren Ende einer Hauptrille und dem Laufstreiferand gezogene Gerade ein bis drei, insbesondere zwei, Hauptrillen, kreuzt. Es wird daher bei der Auslegung des Verlaufes und der Anordnung der Hauptrillen darauf geachtet, dass die Profilpositive zwischen benachbarten Hauptrillen eine für die Steifigkeit des Laufstreifens günstige Breite aufweisen.

Die Profilpositive zwischen den in einer Laufstreifenhälfte verlaufenden Hauptrillen können durch Quernuten, die vorzugsweise gerade verlaufen, in Blöcke gegliedert sein. Die Quernuten werden dabei insbesondere in einer Breite ausgeführt, die geringer ist als die Breite der Hauptrillen. Durch Quernuten lässt sich einerseits das Wasserableitvermögen des Profils unterstützen und andererseits die Profilsteifigkeit beeinflussen. In diesem Zusammenhang ist es auch von Vorteil, wenn die Tiefe der Quernuten geringer ist als die Tiefe der Hauptrillen.

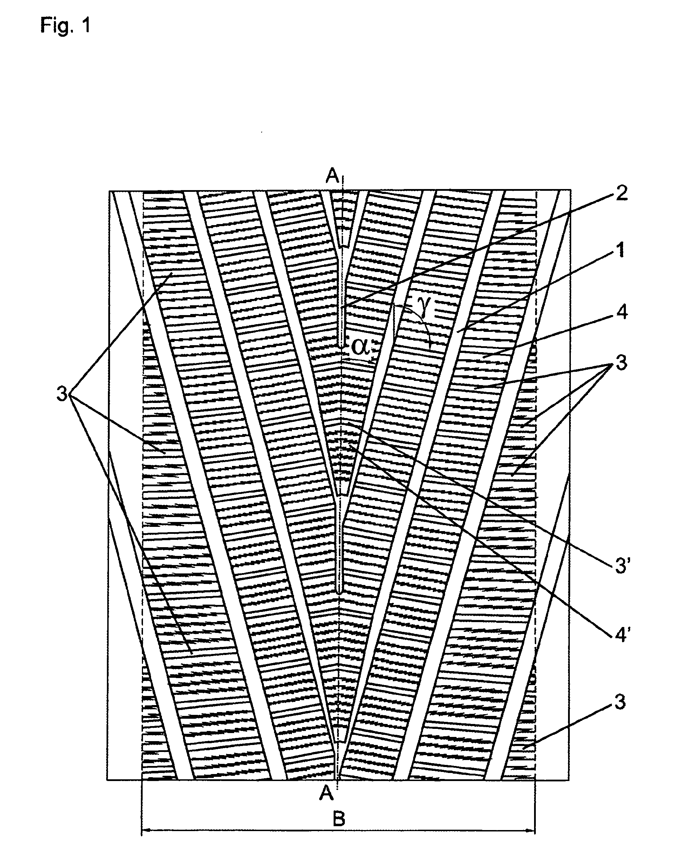

Weitere Merkmale, Vorteile und Einzelheiten der Erfindung werden nun anhand der schematischen Zeichnung, die ein Ausführungsbeispiel darstellt, näher beschrieben. Dabei zeigt die einzige Zeichnungsfigur, Fig. 1, eine Draufsicht auf einen Abschnitt einer Abwicklung eines Laufstreifens eines Fahrzeugluftreifens mit einer Ausführungsvariante der Erfindung.

Die in der Figur dargestellte Ausführungsvariante eines Laufstreifens für einen Fahrzeugluftreifen für Personenkraftwagen ist insbesondere für den Einsatz unter winterlichen Fahrbedingungen vorgesehen. Die Erfindung ist jedoch nicht auf Winterreifen eingeschränkt, erfindungsgemäß ausgeführte Laufstreifen können auch auf Sommerreifen oder auf Ganzjahresreifen eingesetzt werden.

In Fig. 1 ist mit A-A der Reifenäquator und mit B die Breite des bodenberührenden Teils des Laufstreifens bezeichnet. Ein gemäß der Erfindung ausgeführter Laufstreifen ist laufrichtungsgebunden ausgeführt und weist über die Breite B V-förmig angeordnete Hauptrillen 1 auf, welche von der Laufstreifenmitte, bei der gezeigten Ausführungsform vom Reifenäquator A-A ausgehend, geradlinig bis über den jeweiligen Laufstreifenrand hinaus verlaufen und mit der Umfangsrichtung, dem Reifenäquator A-A, einen spitzen Winkel α in der Größenordnung von 5° bis 25°, insbesondere < 20°, einschließen. Die Neigung der Hauptrillen 1 in der einen Laufstreifenhälfte ist gegensinnig zur Neigung der Hauptrillen 1 in der anderen Laufstreifenhälfte. Die Montage eines Reifens mit einem erfindungsgemäß ausgeführten Laufstreifen am Fahrzeug erfolgt derart, dass beim Abrollen des Reifens die im Bereich der Laufstreifenmitte gelegenen Enden der Hauptrillen 1 zuerst in den Untergrund einlaufen. In Folge des geringen Neigungswinkels α weisen die in jeder Laufstreifenhälfte zueinander parallel verlaufenden Hauptrillen 1 eine große Länge auf. Über einen Großteil ihrer Erstreckung besitzen die Hauptrillen 1 eine konstante Breite in der Größenordnung von 4 mm bis 7 mm. Lediglich nahe ihre Enden beim Reifenäquator A-A münden die Hauptrillen 1 in in Umfangsrichtung verlaufende Kurznuten 2, die dafür sorgen, dass die breiten Profilpositive zwischen den beim Reifenäquator A-A zusammentreffenden Hauptrillen 1 geteilt werden, um eine für einen gleichmäßigen Abrieb ungünstige, weil zu breite, Quererstreckung von Profilpositiven zu vermeiden. Alternativ dazu ist es möglich, die Hauptrillen 1 derart auszuführen, dass ihre Breite über ihre Erstreckung größer wird. Der gegenseitige Abstand der Hauptrillen 1 in jeder Laufstreifenhälfte wird derart gewählt, dass eine in Querrichtung von einem axial inneren Ende einer Hauptrille 1 aus gezogene Gerade in Abhängigkeit von der Größe des Winkels α ein bis drei, insbesondere zwei weitere Hauptrillen 1 kreuzt. Der gegenseitige Abstand der in jeder Laufstreifenhälfte verlaufenden Hauptrillen 1 wird ferner variiert, sodass die Breite der Blöcke 4 zwischen den Hauptrillen 1 unterschiedlich ist.

Bei einer nicht gezeigten Variante der Erfindung weisen die Hauptrillen 1 einen leicht bogenförmigen Verlauf auf, derart, dass sich der Winkel α von den laufstreifenmittig gelegenen Enden bis zu den außerhalb der Breite B befindlichen Enden kontinuierlich und um maximal 10° vergrößert, wobei α im Bereich von 5° bis 25° bleibt.

Durch eine Vielzahl von gerade verlaufenden Quernuten 3 sind die Profilpositive zwischen den einander benachbarten Hauptrillen in jeder Laufstreifenhälfte in eine Anzahl von Profilblöcke 4 gegliedert. Die Quernuten 3 schließen mit der Umfangsrichtung jeweils einen Winkel γ in der Größenordnung von 85° bis 115° ein. Bei einem Großteil der Quernuten 4 entspricht der gegenseitige Abstand der Quernuten 3 höchstens ihrer Erstreckungslänge. In der Laufstreifenmitte, dort, wo keine Kurznuten 2 verlaufen, wird durch flach-V-förmig verlaufenden Quernuten 3', deren Abschnitte an den Verlauf der Quernuten 3 in der jeweiligen Laufstreifenhälfte angepasst sind, der Laufstreifen in Blöcke 4' gegliedert. Die Quernuten 3, 3' weisen eine konstante und bei der gezeigten Ausführungsvariante geringere Tiefe auf als die Hauptrillen 1 auf, die jedoch zumindest 2 mm beträgt. Die Quernuten 3, 3' können auch eine Tiefe aufweisen, die der Tiefe der Hauptrillen 1 entspricht. Die Breite der Quernuten 3, 3' beträgt in der Größenordnung von 2 mm bis 4 mm, wobei die Breite der Quernuten 3, 3' in jedem Fall kleiner ist als die Breite der Hauptrillen 1.

Der Laufstreifen kann im Mittelbereich auch anders gestaltet sein, beispielsweise können die Hauptrillen 1 in einem gewissen Abstand vom Reifenäquator A-A enden und es können die Quernuten 3' einen anderen als den gezeigten Verlauf aufweisen.

Da der dargestellte Laufstreifen für einen Winterreifen vorgesehen ist, ist in jedem Profilblock 4, 4' eine Anzahl von Einschnitten 5 vorgesehen. Die Einschnitte 5 verlaufen parallel zu den Quernuten 3, 3', weisen zueinander und zu den von den Quernuten 3, 3' begrenzten Blockkanten zumindest im Wesentlichen gleichgroße Abstände auf und haben bei der gezeigten Ausführungsform einen zick-zack- bzw. wellenförmigen Verlauf. Die Einschnitte 5 können auch einen geraden Verlauf aufweisen und zumindest abschnittweise bis auf die Tiefe der Hauptrillen 1 ausgeführt sein, sie können jedoch auch eine geringere Tiefe aufweisen und/oder aus Abschnitten unterschiedlicher Tiefe bestehen. Bei der in der Figur gezeigten Ausführungsvariante sind pro Block zwischen sieben und drei Einschnitte 5 vorgesehen.

Ein besonderer Vorteil der erfindungsgemäß ausgeführten Hauptrillen 1 ist ihr gutes Wasserableitvermögen, auch bei den höheren Geschwindigkeiten. Die von den Hauptrillen 1 und den Quernuten 3, 3' gebildeten Blöcke 4, 4' weisen eine hohe und gleichmäßige Quersteifigkeit auf und begünstigen gute Handlingeigenschaften des Reifens auf trockenen Fahrbahnen.

Bei einer alternativen, nicht gezeigten Ausführungsvariante werden keine Quernuten vorgesehen, wobei die Profilpositive zwischen den Hauptrillen 1 Profilbänder bilden. Diese können durch durchgehende oder nicht durchgehende Einschnitte strukturiert sein. Eine solche Ausführungsvariante eignet sich vor Allem für Sommerreifen.

### Bezugsziffernliste

- A-A: Reifenäquator
- 1: Hauptrillen
- 2: Kurznuten
- 3: Quernuten
- 3': Quernuten
- 4: Profilblöcke
- 4': Blöcke
- 5 .....: Einschnitte
- α.....: Neigungswinkel
- γ .....: Neigungswinkel

## Patentansprüche

1. Fahrzeugluftreifen mit einem Laufstreifen, welcher laufrichtungsgebunden ausgeführt ist und eine Vielzahl von V-förmig verlaufenden Hauptrillen (1) aufweist, die zumindest abschnittsweise unter einem Winkel (α) zwischen 5° und 25° zur Umfangsrichtung verlaufen, wobei die Hauptrillen (1) über ihre gesamte Erstreckung im bodenberührenden Teil des Laufstreifens einen geraden oder nahezu geraden Verlauf aufweisen und sich unter Beibehaltung ihres Verlaufes über die Bodenaufstandsfläche des Reifens hinaus erstrecken, wobei die Hauptrillen (1) aus den beiden Laufstreifenhälften in der Laufstreifenmitte jeweils paarweise zusammentreffen und in eine in Umfangsrichtung, in ihrer Verlängerung verlaufende Kurznut (2) übergehen, und wobei die Profilpositive zwischen den in einer Laufstreifenhälfte verlaufenden Hauptrillen (1) durch Quernuten (3), die vorzugsweise gerade verlaufen, in Blöcke (4) gegliedert sind,
**dadurch gekennzeichnet,**
**dass** zwischen den Endabschnitten der paarweise zusammentreffenden Hauptrillen (1), dort, wo keine Kurznuten (2) verlaufen, sowie zwischen den Kurznuten (2) und den Hauptrillen (1) durch Quernuten (3, 3') weitere Blöcke (4, 4') gebildet sind.

2. Fahrzeugluftreifen nach Anspruch 1, **dadurch gekennzeichnet, dass** die Quernuten (3') zwischen den Endabschnitten der Hauptrillen (1) ? V-förmig verlaufen, wobei der Verlauf ihrer Abschnitte an den Verlauf der Quernuten (3) in der jeweiligen Laufstreifenhälfte angepasst ist.

3. Fahrzeugluftreifen nach Anspruch 1 oder 2, **dadurch gekennzeichnet, dass** die Quernuten (3, 3') in der Laufstreifenhälfte mit der Umfangsrichtung einen Winkel (γ) einschließen, welcher zwischen 83° und 115° beträgt.

4. Fahrzeugluftreifen nach Anspruch 1, **dadurch gekennzeichnet, dass** die Hauptrillen (1) derart verlaufen, dass der Winkel (α), den sie mit der Umfangsrichtung einschließen, zwischen ihren Enden in der Laufstreifenmitte und ihren Enden außerhalb der des bodenberührenden Teils des Laufstreifens um maximal 10° und kontinuierlich größer wird.

5. Fahrzeugluftreifen nach Anspruch 1 oder 4, **dadurch gekennzeichnet, dass** die Hauptrillen (1), gegebenenfalls bis auf ihre Endabschnitte in der Laufstreifenmitte, über ihre Erstreckung eine zumindest im Wesentlichen konstante Breite aufweisen.

6. Fahrzeugluftreifen nach einem der Ansprüche 4 oder 5, **dadurch gekennzeichnet, dass** sich die Breite der Hauptrillen (1) von der Laufstreifenmitte bis zu ihren Enden außerhalb des bodenberührenden Teils kontinuierlich vergrößert.

7. Fahrzeugluftreifen nach einem der Ansprüche 1 oder 4 bis 6, **dadurch gekennzeichnet, dass** der gegenseitige Abstand der Hauptrillen (1) derart bemessen ist, dass eine in Laufstreifenquerrichtung zwischen dem axial inneren Ende einer Hauptrille (1) und dem Laufstreifenrand gezogene Gerade ein bis drei, insbesondere zwei, Hauptrillen (1) kreuzt.

8. Fahrzeugluftreifen nach einem der Ansprüche 1 bis 7, **dadurch gekennzeichnet, dass** die Breite der Quernuten (3) geringer ist als die Breite der Hauptrillen (1).

9. Fahrzeugluftreifen nach Anspruch 1 bis 8, **dadurch gekennzeichnet, dass** die Tiefe der Quernuten (3) geringer ist als die Tiefe der Hauptrillen (1).

## Claims

1. Pneumatic vehicle tyre with a tread rubber, which is of a directional configuration and has a multiplicity of main channels (1) running in a V-shaped manner, which at least in certain portions run at an angle (α) of between 5° and 25° in relation to the circumferential direction, the main channels (1) following a straight or virtually straight path over their entire extent in the part of the tread rubber that is in contact with the ground and, while maintaining their path, extending beyond the ground contact area of the tyre, the main channels (1) from the two halves of the tread rubber respectively coming together in pairs in the middle of the tread rubber and going over into a short groove (2) running as an extension thereof in the circumferential direction, and the profile positives between the main channels (1) that run in one half of the tread rubber being divided into blocks (4) by transverse grooves (3), which preferably run straight, **characterized in that** further blocks (4, 4') are formed by transverse grooves (3, 3') between the end portions of the main channels (1) coming together in pairs, at the places where no short grooves (2) run, and between the short grooves (2) and the main channels (1).

2. Pneumatic vehicle tyre according to Claim 1, **characterized in that** the transverse grooves (3') between the end portions of the main channels (1) run in a V-shaped manner, the path followed by the portions thereof being adapted to the path followed by the transverse grooves (3) in the respective tread rubber half.

3. Pneumatic vehicle tyre according to Claim 1 or 2, **characterized in that** the transverse grooves (3, 3') in the tread rubber half form with the circumferential direction an angle (γ), which is between 83° and 115°.

4. Pneumatic vehicle tyre according to Claim 1, **characterized in that** the main channels (1) run in such a way that the angle (α) that they form with the circumferential direction becomes greater by a maximum of 10° and continuously between the ends thereof in the middle of the tread rubber and the ends thereof outside the part of the tread rubber that is in contact with the ground.

5. Pneumatic vehicle tyre according to Claims 1 to 4, **characterized in that** the main channels (1) have an at least substantially constant width over their extent, possibly with the exception of their end portions in the middle of the tread rubber.

6. Pneumatic vehicle tyre according to either of Claims 4 and 5, **characterized in that** the width of the main channels (1) increases continuously from the middle of the tread rubber up to the ends thereof outside the part that is in contact with the ground.

7. Pneumatic vehicle tyre according to one of Claims 1 or 4 to 6, **characterized in that** the mutual spacing between the main channels (1) is dimensioned in such a way that a straight line drawn between the axially inner end of a main channel (1) and the edge of the tread rubber in the transverse direction of the tread rubber crosses one to three, in particular two, main channels (1).

8. Pneumatic vehicle tyre according to one of Claims 1 to 7, **characterized in that** the width of the transverse grooves (3) is less than the width of the main channels (1).

9. Pneumatic vehicle tyre according to Claims 1 to 8, **characterized in that** the depth of the transverse grooves (3) is less than the depth of the main channels (1).

## Revendications

1. Bandage pneumatique pour roue de véhicule, présentant
une bande de roulement à sens de roulement orienté et plusieurs rainures principales (1) qui s'étendent en forme de V et qui dont au moins certaines parties forment avec la direction périphérique un angle (α) compris entre 5° et 25°,
les rainures principales (1) présentant sur toute leur extension dans la partie de la bande de roulement en contact avec le sol une évolution rectiligne ou presque rectiligne et s'étendant au-delà de la surface d'appui au sol du bandage de roue en conservant leur évolution,
les rainures principales (1) des deux moitiés de la bande de roulement coïncidant par paires au milieu de la bande de roulement et se prolongent en un court sillon (2) qui les prolonge dans la direction périphérique,
les profilés positifs étant divisés entre les rainures principales (1) en blocs (4) qui s'étendent dans une moitié de la bande de roulement par des sillons transversaux (3) qui s'étendent de préférence en ligne droite,
**caractérisé en ce que**
d'autres blocs (4, 4') sont formés par des sillons transversaux (3, 3') entre les parties d'extrémité des rainures principales (1) qui coïncident par paires là où les courts sillons (2) sont absents ainsi qu'entre les courts sillons (2) et les rainures principales (1).

2. Bandage pneumatique pour roue de véhicule selon la revendication 1, **caractérisé en ce que** les sillons transversaux (3') s'étendent en forme de V entre les parties d'extrémité des rainures principales (1), l'évolution de leur tronçon étant adaptée dans chaque moitié de la bande de roulement à l'extension des sillons transversaux (3).

3. Bandage pneumatique pour roue de véhicule selon les revendications 1 ou 2, **caractérisé en ce que** dans la moitié de la bande de roulement, les sillons transversaux (3, 3') forment avec la direction périphérique un angle (γ) compris entre 83° et 115°.

4. Bandage pneumatique pour roue de véhicule selon la revendication 1, **caractérisé en ce que** les rainures principales (1) évoluent de telle sorte que l'angle (α) qu'elles forment avec la direction périphérique augmente d'au maximum 10° et de manière continue entre leur extrémité située au milieu de la bande de roulement et leur extrémité située à l'extérieur de la partie de la bande de roulement en contact avec le sol.

5. Bandage pneumatique pour roue de véhicule selon les revendications 1 ou 4, **caractérisé en ce que** les rainures principales (1) présentent sur leur extension une largeur au moins essentiellement constante, éventuellement jusqu'à leur partie d'extrémité au milieu de la bande de roulement.

6. Bandage pneumatique pour roue de véhicule selon l'une des revendications 4 ou 5, **caractérisé en ce que** la largeur des rainures principales (1) augmente de manière continue depuis le milieu de la bande de roulement jusqu'à leur extrémité située à l'extérieur de la partie en contact avec le sol.

7. Bandage pneumatique pour roue de véhicule selon l'une des revendications 1 ou 4 à 6, **caractérisé en ce que** la distance mutuelle entre les rainures principales (1) est telle qu'une droite tracée dans la direction transversale de la bande de roulement entre l'extrémité située axialement à l'intérieur d'une rainure principale (1) et le bord de la bande de roulement croise une à trois et en particulier deux rainures principales (1).

8. Bandage pneumatique pour roue de véhicule selon l'une des revendications 1 à 7, **caractérisé en ce que** la largeur des sillons transversaux (3) est plus petite que la largeur des rainures principales (1).

9. Bandage pneumatique pour roue de véhicule selon les revendications 1 à 8, **caractérisé en ce que** la profondeur des sillons transversaux (3) est inférieure à celle des rainures principales (1).
